# NEUE EUROPÄISCHE PATENTSCHRIFT

(11) **EP 2 523 063 B2**
(45) Veröffentlichungstag und Bekanntmachung des Hinweises auf die Entscheidung über den Einspruch: **08.08.2018**
(45) Hinweis auf die Patenterteilung: 22.10.2014
(21) Anmeldenummer: 12163580.9
(22) Anmeldetag: 10.04.2012
(51) Int. Cl.: G05D 16/06

(54) **Druckminderer**
Pressure reducer
Réducteur de pression

(30) Priorität: 10.05.2011 DE 102011101081
(43) Veröffentlichungstag der Anmeldung: 14.11.2012
(73) Patentinhaber: Honeywell Technologies Sarl, 1180 Rolle (CH)
(72) Erfinder: Tasser, Peter, 74842 Billigheim (DE)
(74) Vertreter: Sturm, Christoph

(56) Entgegenhaltungen:
- EP-A1- 0 698 838
- DE-A1- 19 539 239
- DE-A1-102004 025 814
- DE-U1- 9 315 290
- US-A- 2 599 577

## Beschreibung

Die Erfindung betrifft einen Druckminderer nach dem Oberbegriff des Anspruchs 1 bzw. nach dem Oberbegriff des Anspruchs 6.

Druckminderer finden vorzugsweise in Industrieanlagen und Wasserversorgungsanlagen von Häusern oder Gebäuden Anwendung, um bei einem schwankenden Eingangsdruck einen konstanten Ausgangsdruck zur Verfügung zu stellen. Die Installation eines Druckminderers erfolgt hierbei vorzugsweise in einem Keller eines Gebäudes oder in einem Versorgungsschacht, sodass die Gefahr des Einfrierens des Druckminderers nicht besteht. Die Notwendigkeit, einen konstanten Wasserdruck zur Verfügung zu stellen, besteht aber nicht nur bei Industrieanlagen und Wasserversorgungsanlagen, vielmehr gibt es auch andere Anwendungsgebiete die mit einem konstanten Wasserdruck versorgt werden müssen. Im Freien installierte Druckminderer sind bei Frost außer Betrieb gesetzt, wozu eine Entleerung derselben erfolgt.

Ein Druckminderer mit den Merkmalen des Oberbegriffs des Anspruchs 1 ist aus der DE 195 39 239 A1 bekannt. So umfasst der aus diesem Stand der Technik bekannte Druckminderer ein Gehäuse und ein in dem Gehäuse positioniertes Ventil, wobei das Ventil in geschlossenem Zustand desselben einen Vordruckraum des Gehäuses von einem Hinterdruckraum des Gehäuses trennt und in geöffnetem Zustand desselben den Vordruckraum und den Hinterdruckraum verbindet. Das Ventil des aus diesem Stand der Technik bekannten Druckminderers verfügt über eine auf einen Ventilstößel einwirkende Membran, auf die einerseits eine in Öffnungsrichtung des Ventils wirkende Federkraft eines Federelements und andererseits eine in Schließrichtung des Ventils wirkende, vom im Hinterdruckraum herrschenden Druck abhängige Kraft einwirkt.

Am Ventilstößel ist ein Ventilteller befestigt, der im geschlossenen Zustand des Ventils mit einem Dichtelement gegen einen Ventilsitz drückt und im geöffneten Zustand des Ventils vom Ventilsitz abgehoben ist. Nach der DE 195 39 239 A1 ist der Hinterdruckraum mit einem von der Membran begrenzten Druckraum über eine Druckleitung gekoppelt, wobei diese Druckleitung mit deutlichem Abstand vom Ventilsitz vom Hinterdruckraum abzweigt.

Aus DE 93 15 290 U1, DE 10 2004 025 814 A1, EP 0 698 838 A1 sind weitere Druckminderer nach dem Stand der Technik bekannt.

Der Erfindung liegt die Aufgabe zu Grunde, einen neuartigen Druckminderer mit besseren Öffnungsverhalten und Schließverhalten zu schaffen.

Diese Aufgabe wird durch einen Druckminderer gemäß Anspruch 1 und durch einen Druckminderer gemäß Anspruch 6 gelöst.

Mit der hier vorliegenden Erfindung wird vorgeschlagen, dass die oder jede Druckleitung, über welche der Hinterdruckraum mit einem von der Membran begrenzten Druckraum gekoppelt ist, unmittelbar benachbart zum Ventilsitz vom Hinterdruckraum abzweigt. Hierdurch wird gewährleistet, dass die in Schließrichtung des Ventils wirkende Kraft, nicht nur vom im Hinterdruckraum herrschenden Druck abhängig ist, sondern auch von Strömungsverhältnissen im Bereich des Ventilsitzes. Der im Hinterdruckraum unmittelbar benachbart zum Ventilsitz wirkende Druck ist bedingt durch einen Venturi-Effekt des Ventilsitzes bei geöffnetem Ventil geringer als der weiter stromabwärts im Hinterdruckraum herrschende Druck, wodurch letztendlich das Öffnungsverhalten und Schließverhalten des Druckminderers positiv beeinflusst werden kann.

Der Ventilteller trägt ein elastisches Dichtelement, wobei in geschlossenem Zustand des Ventils eine Kante bzw. Ecke des Dichtelements gegen den Ventilsitz drückt, der konisch konturiert ist.

Die obige Ausgestaltung des elastischen Dichtelements, welches im geschlossenen Zustand des Ventils mit einer Kante bzw. Ecke gegen den Ventilsitz drückt, erlaubt eine weitere Verbesserung des Öffnungserhaltens sowie Schließverhaltens des erfindungsgemäßen Druckminderers.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen Querschnitt durch ein Ausführungsbeispiel eines erfindungsgemäßen Druckminderers;
- Fig. 2: ein Detail des Druckminderers der Fig. 1; und
- Fig. 3: einen vergrößerten Ausschnitt aus dem Detail der Fig. 2.

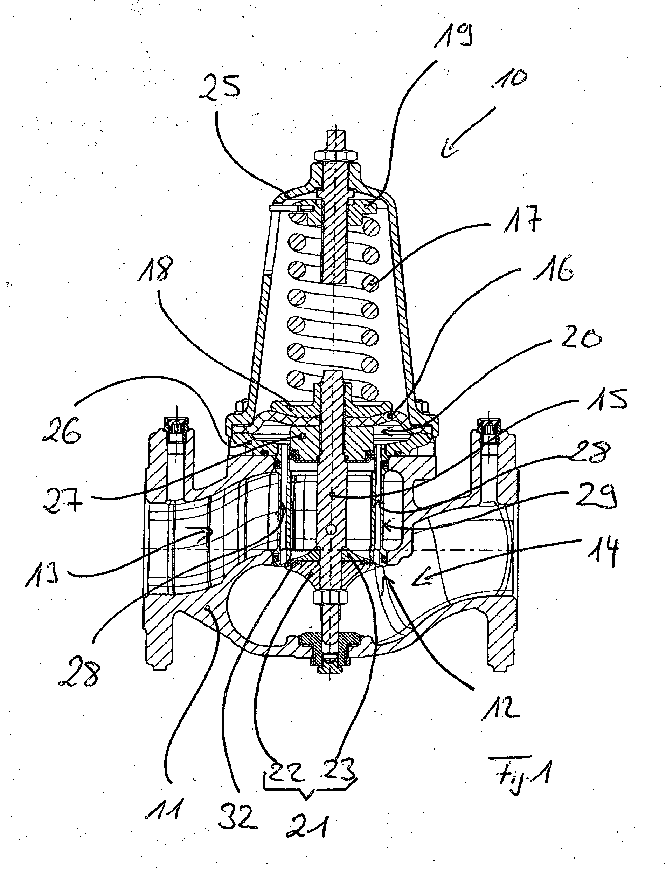

Fig. 1 zeigt einen Querschnitt durch ein bevorzugtes Ausführungsbeispiel eines erfindungsgemäßen Druckminderers 10. Der erfindungsgemäße Druckminderer 10 verfügt über ein Gehäuse 11, wobei im Gehäuse 11 ein Ventil 12 positioniert ist. Das Ventil 12 trennt im geschlossenen Zustand einen Vordruckraum 13 des Gehäuses 11 von einem Hinterdruckraum 14 des Gehäuses 11, wobei im geöffneten Zustand des Ventils 12 der Vordruckraum 13 und der Hinterdruckraum 14 gekoppelt sind.

Das Ventil 12 des Druckminderers 10 verfügt über einen Ventilstößel 15, an welchem eine Membran 16 angreift. Auf die Membran 16 wirkt eine Federkraft ein, die von einem Federelement 17 bereitgestellt wird, wobei das Federelement 17 gemäß Fig. 1 zwischen zwei Federtellern 18, 19 derart eingespannt ist, dass das Federelement 17 über einen der Federteller 18 auf die Membran 16 einwirkt. Die vom Federelement 17 bereitgestellte Federkraft wirkt in Öffnungsrichtung des Ventils 12 des Druckminderers 10. Die Federkraft des Federelements 17 versucht demnach das Ventil 12 des Druckminderers 10 zu öffnen.

Auf die Membran 16 wirkt zusätzlich zu der in Öffnungsrichtung des Ventils 12 wirkenden Federkraft des Federelements 17 eine Kraft ein, die in Schließrichtung des Ventils 12 des Druckminderers 10 wirkt, wobei diese Kraft abhängig von einem Druck ist, der in einem von der Membran 16 begrenzten Druckraum 20 herrscht. Dieser im Druckraum 20 herrschende Druck bzw. die von diesem Druck abhängige und in Schließrichtung des Ventils 12 des Druckminderers 10 wirkende Kraft ist von dem im Hinterdruckraum 14 herrschenden Druck abhängig.

An dem Ventilstößel 15 greift nicht nur die Membran 16 an, sondern vielmehr auch ein Ventilteller 21, der im gezeigten Ausführungsbeispiel der Fig. 1 von zwei Ventiltellersegmenten 22 und 23 gebildet ist. Im geschlossenen Zustand des Ventils 12 des Druckminderers 10 drückt der Ventilteller 21 gegen einen Ventilsitz 24, wobei im geöffneten Zustand des Ventils 12 der Ventilteller 21 vom Ventilsitz 24 abgehoben ist.

Wie Fig. 1 entnommen werden kann, ist das Federelement 17 in einem von einer Federhaube 25 begrenzten Innenraum aufgenommen, wobei die Membran 16 mit seitlichen Abschnitten zwischen der Federhaube 25 und einem Membranträger 26 eingespannt ist. Auf der dem Federelement 17 zugewandten Seite greift in einen mittleren Abschnitt der Membran 16 der Federteller 18 an. Im Bereich des Druckraums 20, also auf der dem Federelement 17 abgewandten Seite der Membran 16, ist zwischen Membran 16 und Ventilstößel 15 ein Dichtelement 27 positioniert.

Beim erfindungsgemäßen Druckminderer zweigt ausgehend vom Hinterdruckraum 14 unmittelbar benachbart zum Ventilsitz 24 mindestens eine Druckleitung 28 ab, über welche die Membran 16 mit dem im Hinterdruckraum 14 im Bereich des Ventilsitzes 24 herrschenden Druck beaufschlagt werden kann. Dieser im Bereich des Ventilsitzes 24 herrschende Druck des Hinterdruckraums 14 ist bei geöffnetem Ventil 12 auch von den Strömungsverhältnissen im Bereich des Ventilsitzes 24 abhängig.

Bedingt durch den Venturi-Effekt ist dabei dieser im Bereich des Ventilsitzes 24 im Hinterdruckraum 14 wirkende Druck geringer als der weiter stromabwärts im Hinterdruckraum 14 herrschende Druck. Durch Verwendung des im Bereich des Ventilsitzes 24 herrschenden Drucks zur Beaufschlagung der Membran 16 kann das Öffnungsverhalten und Schließverhalten des Druckminderers 10 positiv beeinflusst werden.

Der Ventilsitz 24 wird im gezeigten, bevorzugten Ausführungsbeispiel von einem Ventilkäfig 29 bereitgestellt, der in einem unteren Abschnitt 30 desselben den in radial Richtung umlaufenden Ventilsitz 24 bereitstellt und der oberhalb des den Ventilsitz 24 bereitstellenden Abschnitts 30 mehrere Stege 31 aufweist, die in Umfangsrichtung voneinander beabstandet sind, sodass zwischen den Stegen 31 Freiräume ausgebildet sind. Die oder jede Druckleitung 28, die der Kopplung des Hinterdruckraums 14 mit dem Druckraum 20 der Membran 16 dient, ist dabei im gezeigten, bevorzugten Ausführungsbeispiel in jeweils einen der Stege 31 des Ventilkäfigs 29 eingebracht.

Hierdurch wird einfach unter Gewährleistung einer kompakten Bauform die Kopplung des Druckraums 20 der Membran 16 mit dem Hinterdruckraum 14 gewährleistet, nämlich abzweigend vom Hinterdruckraum 14 unmittelbar benachbart zum Ventilsitz 24 des Ventilkäfigs 29.

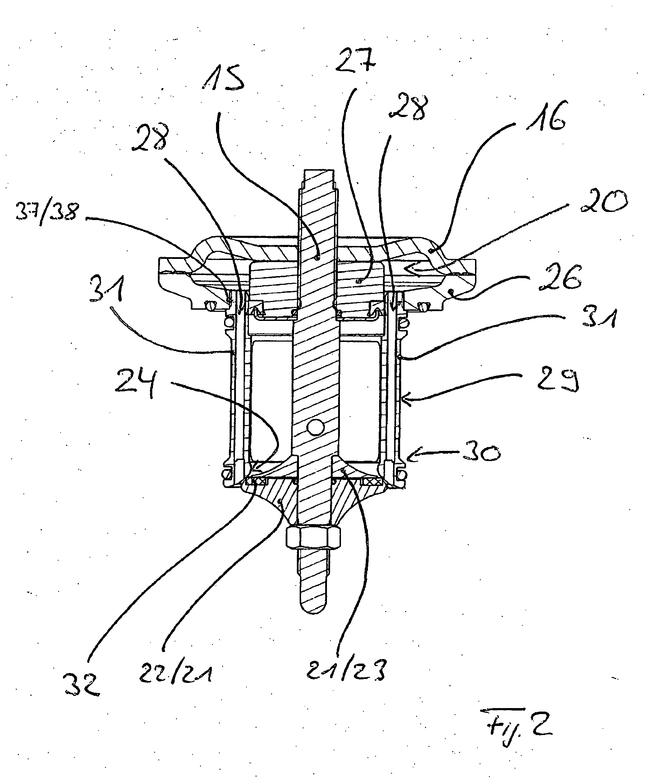

Der Ventilkäfig 29 und der Membranträger 26 sind gemäß Fig. 2 in einem oberen, dem Ventilsitz 24 gegenüberliegenden Ende des Ventilkäfigs 29 miteinander verschraubt. Hierzu wirkt ein Innengewinde 37 des Membranträgers 26 mit einem Außengewinde 38 des Ventilkäfigs 29 zusammen.

Hierdurch ist es möglich, den Druckminderer 10 durch Austausch des Membranträger 26 und der Membran 16 einfach und kostengünstig an verschiedene Membranwirkdurchmesser anzupassen.

Nach einer vorteilhaften Weiterbildung der Erfindung trägt der Ventilteller 21 ein elastisches Dichtelement 32. Dieses elastische Dichtelement 32 ist zwischen den beiden Ventiltellersegmenten 22 und 23 aufgenommen. Das elastische Dichtelement 32 drückt dabei im geschlossenen Zustand des Ventils 12 mit einer Ecke bzw. Kante 33 gegen den Ventilsitz 24.

Die Kante bzw. Ecke 33 des Dichtelements 32 drückt gegen einen konisch konturierten Ventilsitz 24.

Dann, wenn sich der Ventilteller 21 und damit das elastische Dichtelement 32 beim Öffnen des Ventils vom konisch konturierten Ventilsitz 24 abhebt, werden hierdurch definierte Strömungsverhältnisse im Bereich des Ventilsitzes 24 eingestellt, wodurch das Öffnungsverhalten und Schließverhalten des Ventils bzw. Druckminderers 10 weiter verbessert werden kann.

Das elastische Dichtelement 32, welches vom Ventilteller 21 aufgenommen ist und in geschlossenem Zustand des Ventils gegen den Ventilsitz 24 mit der Kante 33 drückt, verfügt über eine Härte zwischen 60 Shore A und 90 Shore A.

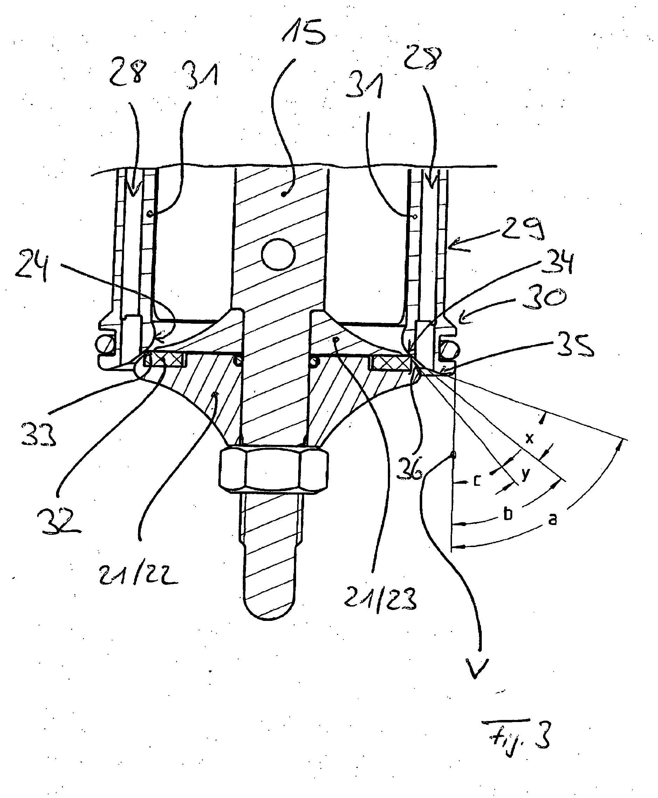

Das Öffnungsverhalten und Schließverhalten des Ventils 12 bzw. Druckminderers 10 kann durch eine definierte Konturierung des Ventilsitzes 24 sowie des mit dem Ventilsitze 24 zusammenwirkenden Ventiltellers 21 weiter verbessert werden. Hierauf wird unter Bezugnahme auf Fig. 3 nachfolgend im Detail eingegangen.

So ist gemäß Fig. 3 ein den konisch konturierten Ventilsitz 24 definierender, radial umlaufender Flächenabschnitt 34, an welchem bei geschlossenem Ventil 12 die Kante 33 des Dichtelements 32 anliegt, gegenüber einer Vertikalen V um einen Winkel b geneigt, wobei dieser Flächenabschnitt 34 mit der Vertikalen V einen Winkel zwischen 40° und 60° einschließt. Im gezeigten Ausführungsbeispiel ist der Flächenabschnitt 34 Bestandteil des Ventilkäfigs 29.

An diesen Flächenabschnitt 34 schließt sich im Bereich des Hinterdruckraums 14 unmittelbar ein Flächenabschnitt 35 an, dessen Kontur mit der Vertikalen V einen Winkel a zwischen 60° und 85° einschließt. Im Bereich dieses Flächenabschnitts 35 bzw. im Bereich zwischen den Flächenabschnitten 34 und 35 zweigen die Druckleitungen 28 ausgehend vom Hinterdruckraum 14 ab, um den Hinterdruckraum 14 mit dem Druckraum 20 der Membran 16 zu koppeln. Im gezeigten Ausführungsbeispiel ist der Flächenabschnitt 35 auch Bestandteil des Ventilkäfigs 29.

Ein Flächenabschnitt 36 des Ventiltellers 21, der bei geschlossenem Ventil 12 und bei geöffnetem Ventil 12 in den Hinterdruckraum 14 hineinragt, schließt mit der Vertikalen V einen Winkel c zwischen 30° und 50° ein, wobei dieser Flächenabschnitt 36 im gezeigten Ausführungsbeispiel vom Ventiltellersegment 22 bereitgestellt ist.

Aus den oben angegebenen Winkelbereichen folgt, dass zwischen dem Flächenabschnitt 36 des Ventiltellers 21, der bei geschlossenem Ventil 12 unmittelbar benachbart zum Dichtelement 32 in den Hinterdruckraum 14 hineinragt, und dem Flächenabschnitt 34 des Ventilsitzes 24 eine Winkeldifferenz x zwischen 10° und 55° vorliegt. Eine Winkeldifferenz y zwischen dem Flächenabschnitt 36 des Ventiltellers 21 und dem Flächenabschnitt 35 beträgt zwischen -10° und 30°.

Durch die obigen Winkelbereiche kann das Strömungsverhalten im Bereich des Ventilsitzes 24 definiert eingestellt werden. Dies hat dann Einfluss auf den Druck, der im Druckraum 20 der Membran 16 in Schließrichtung des Ventils 12 wirkt.

Über die obigen Winkelbereiche lässt sich das Öffnungsverhalten und Schließverhalten des Ventils 12 und damit des Druckminderers 10 definiert einstellen und verbessern.

Wie bereits ausgeführt, zweigt die oder jede Druckleitung 28 ausgehend vom Hinterdruckraum 14 unmittelbar benachbart zum Ventilsitz 24 ab. Wie ebenfalls bereits ausgeführt, zweigt die oder jede Druckleitung 28 im Bereich des Flächenabschnitts 35 bzw. im Bereich zwischen den Flächenabschnitten 34 und 35 ausgehend vom Hinterdruckraum 14 ab, um den Hinterdruckraum 14 mit dem Druckraum 20 der Membran 16 zu koppeln.

Gemäß Fig. 3 besteht dabei in axialer Blickrichtung des Ventilstößels 15 gesehen in der Projektion eine Überlappung zwischen der jeweiligen Druckleitung 28 und dem Flächenabschnitt 36 des Ventiltellers 21, der bei geschlossenem Ventil 12 und bei geöffnetem Ventil 12 in den Hinterdruckraum 14 hineinragt.

Eine Mündungsöffnung der jeweiligen Druckleitung 28 ist am Flächenabschnitt 35 oder zwischen den Flächenabschnitten 34, 35 ausgebildet, wobei die jeweilige Mündungsöffnung und der Flächenabschnitt 36 des Ventiltellers 21, der bei geschlossenem Ventil 12 und bei geöffnetem Ventil 12 in den Hinterdruckraum 14 hineinragt, sich in der Projektion in axialer Blickrichtung des Ventilstößels 15 gesehen teilweise überlappen.

### Bezugszeichenliste

- 10: Druckminderer
- 11: Gehäuse
- 12: Ventil
- 13: Vordruckraum
- 14: Hinterdruckraum
- 15: Ventilstößel
- 16: Membran
- 17: Federelement
- 18: Federteller
- 19: Federteller
- 20: Druckraum
- 21: Ventilteller
- 22: Ventiltellersegment
- 23: Ventiltellersegment
- 24: Ventilsitz
- 25: Federhaube
- 26: Membranträger
- 27: Dichtelement
- 28: Druckleitung
- 29: Ventilkäfig
- 30: Abschnitt
- 31: Steg
- 32: Dichtelement
- 33: Kante
- 34: Flächenabschnitt
- 35: Flächenabschnitt
- 36: Flächenabschnitt
- 37: Innengewinde
- 38: Außengewinde

## Patentansprüche

1. Druckminderer, mit einem Gehäuse (11), und mit einem in dem Gehäuse (11) positionierten Ventil (12), welches in geschlossenem Zustand einen Vordruckraum (13) des Gehäuses (11) von einem Hinterdruckraum (14) des Gehäuses (11) trennt und in geöffnetem Zustand den Vordruckraum (13) und den Hinterdruckraum (14) verbindet, wobei das Ventil (12) eine auf einen Ventilstößel (15) einwirkende Membran (16) aufweist, auf die einerseits eine in Öffnungsrichtung des Ventils (12) wirkende Federkraft eines Federelements (17) und andererseits eine in Schließrichtung des Ventils (12) wirkende, vom im Hinterdruckraum (14) herrschenden Druck abhängige Kraft einwirkt, und wobei das Ventil (12) einen an dem Ventilstößel (15) befestigten Ventilteller (21) aufweist, der in geschlossenem Zustand gegen einen Ventilsitz (24) drückt und der in geöffnetem Zustand von dem Ventilsitz (24) abgehoben ist, wobei
ausgehend vom Hinterdruckraum (14) unmittelbar benachbart zum Ventilsitz (24) mindestens eine Druckleitung (28) abzweigt, um die Membran (16) mit dem im Hinterdruckraum (14) im Bereich des Ventilsitzes (24) herrschenden Druck zu beaufschlagen,
der Ventilteller (21) ein elastisches Dichtelement (32) trägt, wobei in geschlossenem Zustand des Ventils (12) eine Kante bzw. Ecke (33) des Dichtelements (32) gegen den Ventilsitz (24), der konisch konturiert ist, drückt;
ein den Ventilsitz (24) definierender, radial umlaufender Flächenabschnitt (34) mit einer sich parallel zur Axialrichtung des Ventilstößels (15) erstreckenden Vertikalen einen Winkel zwischen 40° und 60° einschließt,
ein sich an den Ventilsitz (24) in Richtung auf den Hinterdruckraum (14) unmittelbar anschließender Flächenabschnitt (35), im Bereich derer die oder jede Druckleitung (28) abzweigt, mit der Vertikalen einen Winkel zwischen 60° und 85° einschließt;
ein Flächenabschnitt (36) des das elastische Dichtelement (32) aufnehmenden Ventiltellers (21), der bei geschlossenem Ventil im Hinterdruckraum (14) angeordnet ist, mit der Vertikalen einem Winkel zwischen 30° und 50° einschließt.

2. Druckminderer nach Anspruch 1, **dadurch gekennzeichnet, dass** der Ventilsitz (24) von einem mehrere Stege (31) aufweisenden und bei geöffnetem Ventil (12) durchströmten Ventilkäfig (29) bereitgestellt ist, wobei in mindestens einen Steg (31) des Ventilkäfigs (29) eine Druckleitung (28) eingebracht ist, die vom Hinterdruckraum (14) unmittelbar benachbart zum Ventilsitzes (24) abzweigt und den Hinterdruckraum (24) mit einem von der Membran (16) begrenzten Druckraum (20) verbindet.

3. Druckminderer nach Anspruch 2, **dadurch gekennzeichnet, dass** der Ventilkäfig (29) an einem dem Ventilsitz (24) gegenüberliegenden Ende mit einem der Membranträger (26) für die Membran (16) verschraubt ist.

4. Druckminderer nach einem der Ansprüche 1 bis 3, **dadurch gekennzeichnet, dass** das elastische Dichtelement (32) eine Härte zwischen 60 Shore A und 90 Shore A aufweist.

5. Druckminderer nach einem der Ansprüche 1 bis 4, **dadurch gekennzeichnet, dass** ein Flächenabschnitt (36) des Ventiltellers (21), der bei geschlossenem Ventil im Hinterdruckraum (14) angeordnet ist, in Axialrichtung des Ventilstößels (15) gesehen in der Projektion eine Überlappung mit der jeweiligen Druckleitung (28) aufweist.

6. Druckminderer, mit einem Gehäuse (11), und mit einem in dem Gehäuse (11) positionierten Ventil (12), welches in geschlossenem Zustand einen Vordruckraum (13) des Gehäuses (11) von einem Hinterdruckraum (14) des Gehäuses (11) trennt und in geöffnetem Zustand den Vordruckraum (13) und den Hinterdruckraum (14) verbindet, wobei das Ventil (12) eine auf einen Ventilstößel (15) einwirkende Membran (16) aufweist, auf die einerseits eine in Öffnungsrichtung des Ventils (12) wirkende Federkraft eines Federelements (17) und andererseits eine in Schließrichtung des Ventils (12) wirkende, vom im Hinterdruckraum (14) herrschenden Druck abhängige Kraft einwirkt, und wobei das Ventil (12) einen an dem Ventilstößel (15) befestigten Ventilteller (21) aufweist, der in geschlossenem Zustand gegen einen Ventilsitz (24) drückt und der in geöffnetem Zustand von dem Ventilsitz (24) abgehoben ist, wobei
ausgehend vom Hinterdruckraum (14) unmittelbar benachbart zum Ventilsitz (24) mindestens eine Druckleitung (28) abzweigt, um die Membran (16) mit dem im Hinterdruckraum (14) im Bereich des Ventilsitzes (24) herrschenden Druck zu beaufschlagen,
der Ventilteller (21) ein elastisches Dichtelement (32) trägt, wobei in geschlossenem Zustand des Ventils (12) eine Kante bzw. Ecke (33) des Dichtelements (32) gegen den Ventilsitz (24), der konisch konturiert ist, drückt;
ein Flächenabschnitt (36) des Ventiltellers (21), der bei geschlossenem Ventil im Hinterdruckraum (14) angeordnet ist, in Axialrichtung des Ventilstößels (15) gesehen in der Projektion eine Überlappung mit der jeweiligen Druckleitung (28) aufweist.

7. Druckminderer nach Anspruch 6, **dadurch gekennzeichnet, dass** der Ventilsitz (24) von einem mehrere Stege (31) aufweisenden und bei geöffnetem Ventil (12) durchströmten Ventilkäfig (29) bereitgestellt ist, wobei in mindestes einen Steg (31) des Ventilkäfigs (29) eine Druckleitung (28) eingebracht ist, die vom Hinterdruckraum (14) unmittelbar benachbart zum Ventilsitzes (24) abzweigt und den Hinterdruckraum (24) mit einem von der Membran (16) begrenzten Druckraum (20) verbindet.

8. Druckminderer nach Anspruch 7, **dadurch gekennzeichnet, dass** der Ventilkäfig (29) an einem dem Ventilsitz (24) gegenüberliegenden Ende mit einem der Membranträger (26) für die Membran (16) verschraubt ist.

9. Druckminderer nach einem der Ansprüche 6 bis 8, **dadurch gekennzeichnet, dass** das elastische Dichtelement (32) eine Härte zwischen 60 Shore A und 90 Shore A aufweist.

10. Druckminderer nach einem der Ansprüche 6 bis 9, **dadurch gekennzeichnet, dass** ein den Ventilsitz (24) definierender, radial umlaufender Flächenabschnitt (34) mit einer Vertikalen einen Winkel zwischen 40° und 60° einschließt.

11. Druckminderer nach Anspruch 10, **dadurch gekennzeichnet, dass** ein sich an den Ventilsitz (24) in Richtung auf den Hinterdruckraum (14) unmittelbar anschließender Flächenabschnitt (35), im Bereich derer die oder jede Druckleitung (28) abzweigt, mit der Vertikalen einen Winkel zwischen 60° und 85° einschließt.

12. Druckminderer nach einem der Ansprüche 6 bis 11, **dadurch gekennzeichnet, dass** ein Flächenabschnitt (36) des das elastische Dichtelement (32) aufnehmenden Ventiltellers (21), der bei geschlossenem Ventil im Hinterdruckraum (14) angeordnet ist, mit einer Vertikalen einem Winkel zwischen 30° und 50° einschließt.

## Claims

1. Pressure reducer, with a housing (11) and with a valve (12) which is positioned in the housing (11) and, in the closed state, separates an admission-pressure space (13) of the housing (11) from a back-pressure space (14) of the housing (11) and, in the open state, connects the admission-pressure space (13) and the back-pressure space (14), the valve (12) having a diaphragm (16) which acts upon a valve tappet (15) and upon which act, on the one hand, a spring force, acting in the opening direction of the valve (12), of a spring element (17) and, on the other hand, a force acting in the closing direction of the valve (12) and dependent on the pressure prevailing in the back-pressure space (14), and the valve (12) having a valve disc (21) which is fastened to the valve tappet (15) and which, in the closed state, presses against a valve seat (24) and, in the open state, is lifted off from the valve seat (24),
at least one pressure line (28) branching off from the back-pressure space (14) directly adjacently to the valve seat (24), in order to load the diaphragm (16) with the pressure prevailing in the back-pressure space (14) in the region of the valve seat (24),
the valve disc (21) carrying an elastic sealing element (32), an edge or corner (33) for the sealing element (32) pressing against the valve seat (24), which is conically contoured, in the closed state of the valve (12);
a radially continuous surface portion (34) defining the valve seat (24) forming an angle of between 40° and 60° with a vertical line extending parallel to the axial direction of the valve tappet (15),
a surface portion (35) which directly adjoins the valve seat (24) in the direction towards the back-pressure space (14) and, in the region of which the or each pressure line (28) branches off, forming an angle between 60° and 85° with the vertical line;
a surface portion (36) of the valve disc (21) receiving the elastic sealing element (32), which surface portion is arranged in the back-pressure space (14) when the valve is closed, forming an angle between 30° and 50° with the vertical line.

2. Pressure reducer according to Claim 1, **characterized in that** the valve seat (24) is provided by a valve cage (29) which has a plurality of webs (31) and through which the flow passes when the valve (12) is open, there being introduced into at least one web (31) of the valve cage (29) a pressure line (28) which branches off from the back-pressure space (14) directly adjacent to the valve seat (24) and connects the back-pressure space (24) to a pressure space (20) delimited by the diaphragm (16).

3. Pressure reducer according to Claim 2, **characterized in that** the valve cage (29) is screwed at an end lying opposite the valve seat (24) to one of the diaphragm carriers (26) for the diaphragm (16).

4. Pressure reducer according to one of Claims 1 to 3, **characterized in that** the elastic sealing element (32) has a hardness of between 60 Shore A and 90 Shore A.

5. Pressure reducer according to one of Claims 1 to 4, **characterized in that** a surface portion (36) of the valve disc (21), which surface portion is arranged in the back-pressure space (14) when the valve is closed, has in projection, as seen in the axial direction of the valve tappet (15), an overlap to the respective pressure line (28).

6. Pressure reducer, with a housing (11) and with a valve (12) which is positioned in the housing (11) and, in the closed state, separates an admission-pressure space (13) of the housing (11) from a back-pressure space (14) of the housing (11) and, in the open state, connects the admission-pressure space (13) and the back-pressure space (14), the valve (12) having a diaphragm (16) which acts upon a valve tappet (15) and upon which act, on the one hand, a spring force, acting in the opening direction of the valve (12), of a spring element (17) and, on the other hand, a force acting in the closing direction of the valve (12) and dependent on the pressure prevailing in the back-pressure space (14), and the valve (12) having a valve disc (21) which is fastened to the valve tappet (15) and which, in the closed state, presses against a valve seat (24) and, in the open state, is lifted off from the valve seat (24),
at least one pressure line (28) branching off from the back-pressure space (14) directly adjacently to the valve seat (24), in order to load the diaphragm (16) with the pressure prevailing in the back-pressure space (14) in the region of the valve seat (24),
the valve disc (21) carrying an elastic sealing element (32), an edge or corner (33) for the sealing element (32) pressing against the valve seat (24), which is conically contoured, in the closed state of the valve (12);
a surface portion (36) of the valve disc (21), which surface portion is arranged in the back-pressure space (14) when the valve is closed, having in projection, as seen in the axial direction of the valve tappet (15), an overlap to the respective pressure line (28).

7. Pressure reducer according to Claim 6, **characterized in that** the valve seat (24) is provided by a valve cage (29) which has a plurality of webs (31) and through which the flow passes when the valve (12) is open, there being introduced into at least one web (31) of the valve cage (29) a pressure line (28) which branches off from the back-pressure space (14) directly adjacent to the valve seat (24) and connects the back-pressure space (24) to a pressure space (20) delimited by the diaphragm (16).

8. Pressure reducer according to Claim 7, **characterized in that** the valve cage (29) is screwed at an end lying opposite the valve seat (24) to one of the diaphragm carriers (26) for the diaphragm (16).

9. Pressure reducer according to one of Claims 6 to 8, **characterized in that** the elastic sealing element (32) has a hardness of between 60 Shore A and 90 Shore A.

10. Pressure reducer according to one of Claims 6 to 9, **characterized in that** a radially continuous surface portion (34) defining the valve seat (24) forms an angle of between 40° and 60° with a vertical line.

11. Pressure reducer according to Claim 10, **characterized in that** a surface portion (35) which directly adjoins the valve seat (24) in the direction towards the back-pressure space (14), and in the region of which the or each pressure line (28) branches off, forms an angle between 60° and 85° with the vertical line.

12. Pressure reducer according to one of Claims 6 to 11, **characterized in that** a surface portion (36) of the valve disc (21) receiving the elastic sealing element (32), which surface portion is arranged in the back-pressure space (14) when the valve is closed, forms an angle between 30° and 50° with a vertical line.

## Revendications

1. Réducteur de pression, comprenant un boîtier (11), et comprenant une soupape (12) positionnée dans le boîtier (11), laquelle sépare, à l'état fermé, un espace de pression amont (13) du boîtier (11) d'un espace de pression aval (14) du boîtier (11) et relie, à l'état ouvert, l'espace de pression amont (13) et l'espace de pression aval (14), la soupape (12) comprenant une membrane (16) agissant sur un poussoir de soupape (15), sur laquelle membrane agit d'une part une force de ressort d'un élément ressort (17) agissant dans le sens d'ouverture de la soupape (12) et d'autre part une force agissant dans le sens de fermeture de la soupape (12) et dépendante de la pression régnant dans l'espace de pression aval (14), et la soupape (12) comprenant un disque de soupape (21) fixé au poussoir de soupape (15), lequel disque de soupape est, à l'état fermé, pressé contre un siège de soupape (24) et, à l'état ouvert, soulevé du siège de soupape (24),
au moins une conduite de pression (28) bifurquant à partir de l'espace de pression aval (14) à proximité immédiate du siège de soupape (24), afin de solliciter la membrane (16) avec la pression régnant dans l'espace de pression aval (14) dans la région du siège de soupape (24),
le disque de soupape (21) portant un élément d'étanchéité (32) élastique, une arête ou un coin (33) de l'élément d'étanchéité (32) étant pressé(e) contre le siège de soupape (24), qui est de contour conique, à l'état fermé de la soupape (12) ;
une portion de surface (34) radialement périphérique définissant le siège de soupape (24) formant avec une ligne verticale s'étendant parallèlement à la direction axiale du poussoir de soupape (15) un angle entre 40° et 60° ;
une portion de surface (35) se raccordant directement au siège de soupape (24) en direction de l'espace de pression aval (14), dans la région de laquelle portion de surface bifurque la ou chaque conduite de pression (28), formant avec la ligne verticale un angle entre 60° et 85° ;
une portion de surface (36) du disque de soupape (21) recevant l'élément d'étanchéité (32) élastique, laquelle est disposée dans l'espace de pression aval (14) lorsque la soupape est fermée, formant avec la ligne verticale un angle entre 30° et 50°.

2. Réducteur de pression selon la revendication 1, **caractérisé en ce que** le siège de soupape (24) est produit par une cage de soupape (29) comprenant plusieurs nervures (31) et traversée lorsque la soupape (12) est ouverte, une conduite de pression (28) étant ménagée dans au moins une nervure (31) de la cage de soupape (29), laquelle conduite de pression bifurque de l'espace de pression aval (14) à proximité immédiate du siège de soupape (24) et relie l'espace de pression aval (24) à un espace de pression (20) délimité par la membrane (16) .

3. Réducteur de pression selon la revendication 2, **caractérisé en ce que** la cage de soupape (29) est vissée sur l'un des supports de membrane (26) pour la membrane (16) à une extrémité opposée au siège de soupape (24).

4. Réducteur de pression selon l'une quelconque des revendications 1 à 3, **caractérisé en ce que** l'élément d'étanchéité (32) élastique présente une dureté d'entre 60 Shore A et 90 Shore A.

5. Réducteur de pression selon l'une quelconque des revendications 1 à 4, **caractérisé en ce qu'**une portion de surface (36) du disque de soupape (21), laquelle est disposée dans l'espace de pression aval (14) lorsque la soupape est fermée, présente, vu en projection dans la direction axiale du poussoir de soupape (15), un chevauchement avec la conduite de pression (28) respective.

6. Réducteur de pression, comprenant un boîtier (11), et comprenant une soupape (12) positionnée dans le boîtier (11), laquelle sépare, à l'état fermé, un espace de pression amont (13) du boîtier (11) d'un espace de pression aval (14) du boîtier (11) et relie, à l'état ouvert, l'espace de pression amont (13) et l'espace de pression aval (14), la soupape (12) comprenant une membrane (16) agissant sur un poussoir de soupape (15), sur laquelle membrane agit d'une part une force de ressort d'un élément ressort (17) agissant dans le sens d'ouverture de la soupape (12) et d'autre part une force agissant dans le sens de fermeture de la soupape (12) et dépendante de la pression régnant dans l'espace de pression aval (14), et la soupape (12) comprenant un disque de soupape (21) fixé au poussoir de soupape (15), lequel disque de soupape est, à l'état fermé, pressé contre un siège de soupape (24) et, à l'état ouvert, soulevé du siège de soupape (24),
au moins une conduite de pression (28) bifurquant à partir de l'espace de pression aval (14) à proximité immédiate du siège de soupape (24), afin de solliciter la membrane (16) avec la pression régnant dans l'espace de pression aval (14) dans la région du siège de soupape (24),
le disque de soupape (21) portant un élément d'étanchéité (32) élastique, une arête ou un coin (33) de l'élément d'étanchéité (32) étant pressé(e) contre le siège de soupape (24), qui est de contour conique, à l'état fermé de la soupape (12) ;
une portion de surface (36) du disque de soupape (21), laquelle est disposée dans l'espace de pression aval (14) lorsque la soupape est fermée, présentant, vu en projection dans la direction axiale du poussoir de soupape (15), un chevauchement avec la conduite de pression (28) respective.

7. Réducteur de pression selon la revendication 6, **caractérisé en ce que** le siège de soupape (24) est produit par une cage de soupape (29) comprenant plusieurs nervures (31) et traversée lorsque la soupape (12) est ouverte, une conduite de pression (28) étant ménagée dans au moins une nervure (31) de la cage de soupape (29), laquelle conduite de pression bifurque de l'espace de pression aval (14) à proximité immédiate du siège de soupape (24) et relie l'espace de pression aval (24) à un espace de pression (20) délimité par la membrane (16) .

8. Réducteur de pression selon la revendication 7, **caractérisé en ce que** la cage de soupape (29) est vissée sur l'un des supports de membrane (26) pour la membrane (16) à une extrémité opposée au siège de soupape (24).

9. Réducteur de pression selon l'une quelconque des revendications 6 à 8, **caractérisé en ce que** l'élément d'étanchéité (32) élastique présente une dureté d'entre 60 Shore A et 90 Shore A.

10. Réducteur de pression selon l'une quelconque des revendications 6 à 9, **caractérisé en ce qu'**une portion de surface (34) radialement périphérique définissant le siège de soupape (24) forme avec une ligne verticale un angle entre 40° et 60°.

11. Réducteur de pression selon la revendication 10, **caractérisé en ce qu'**une portion de surface (35) se raccordant directement au siège de soupape (24) en direction de l'espace de pression aval (14), dans la région de laquelle portion de surface bifurque la ou chaque conduite de pression (28), forme avec la ligne verticale un angle entre 60° et 85°.

12. Réducteur de pression selon l'une quelconque des revendications 6 à 11, **caractérisé en ce qu'**une portion de surface (36) du disque de soupape (21) recevant l'élément d'étanchéité (32) élastique, laquelle est disposée dans l'espace de pression aval (14) lorsque la soupape est fermée, forme avec une ligne verticale un angle entre 30° et 50°.
